# EUROPEAN PATENT SPECIFICATION

(11) **EP 3 424 817 B1**
(45) Date of publication and mention of the grant of the patent: **02.09.2020**
(21) Application number: 17400041.4
(22) Date of filing: 06.07.2017
(51) Int. Cl.: B64C 27/82, B64C 27/32

(54) **A ROTOR HUB FOR A TAIL ROTOR OF A ROTORCRAFT**
ROTORNABE FÜR EINEN HECKROTOR EINES DREHFLÜGELFLUGZEUGS
MOYEU DE ROTOR POUR ROTOR ARRIÈRE D'UN GIRAVION

(43) Date of publication of application: 09.01.2019
(73) Proprietor: AIRBUS HELICOPTERS DEUTSCHLAND GmbH, 86609 Donauwörth (DE)
(72) Inventor: Kuntze-Fechner, Gerald, 83703 Gmund am Tegernsee (DE); Vogl, Julius, 86368 Gersthofen (DE)
(74) Representative: GPI & Associés

(56) References cited:
- EP-A2- 0 301 995
- US-A- 4 626 172
- US-B1- 8 262 358

## Description

The invention is related to a rotor hub for a tail rotor of a rotorcraft that comprises a plurality of tail rotor blades which are drivable by means of an associated tail rotor drive shaft.

The document EP 0 686 554 A1 describes a rotorcraft with a main rotor and a counter-torque rotor that is positioned at a tail boom of the rotorcraft. The counter-torque rotor is provided for counteracting main rotor torque created by the main rotor on a respective airframe of the rotorcraft. More specifically, the counter-torque rotor is rotatably arranged within a transverse duct located at a duct-type portion of the tail boom and, thus, embodied as a ducted tail rotor in the form of a Fenestron® tail rotor. The duct-type portion is provided with a shroud that defines the transverse duct. However, as such a counter-torque rotor and, more specifically, structure and arrangement of a ducted tail rotor in general, as well as suitable means for rotationally driving it, are well known by the skilled person, a more detailed description thereof is omitted for brevity and conciseness.

Beyond that, the documents US 3,594,097, US 4,626,172, US 4,626,173, US 5,306,119, and US 5,383,767 describe suitable pitch control devices for controlling collective pitch of corresponding rotor blades of a ducted tail rotor. More specifically, these pitch control devices respectively include a rotor hub that consists of several components including, as main components, a hub-body, a splined flange, and a pitch control member, which is also referred to as the "control spider". The hub-body builds the support of respective tail rotor blades of the ducted tail rotor, which generate thrust to counteract a respective main rotor torque. The respectively generated thrust is varied by in- or decreasing an underlying angle of attack of the respective tail rotor blades using the control spider. In order to enable pitch angle control of the respective tail rotor blades using the control spider, the tail rotor blades are supported along their blade axes to enable a rotation thereof around the blade axes. Therefore, the hub-body rotatably supports the respective tail rotor blades. Furthermore, the hub-body is rigidly mounted to the splined flange for drivingly coupling the respective tail rotor blades to a tail rotor drive shaft of an associated tail gearbox that drives the ducted tail rotor in operation. Thus, in operation the splined flange transfers a drive torque from the tail rotor drive shaft to the hub-body such that the latter rotates, thereby entraining the respective tail rotor blades while the collective pitch of the respective tail rotor blades is controlled using the control spider.

The documents EP0301995 and US8262358 have also been considered.

However, for enabling introduction of a required rotation and torque into the hub-body such that rotation of the hub-body and the respective tail rotor blades for generation of a respectively required counteracting thrust is enabled, a strong and durable connection of the hub-body to the tail gearbox resp. the tail rotor drive shaft must be provided. Furthermore, the hub-body must be suitable for support and transfer of the centrifugal force of the tail rotor blades resulting from their rotation. Moreover, as a given ducted tail rotor is usually positioned at an aft position of a respective rotorcraft, its weight has a big impact on an overall center of gravity of the rotorcraft. Finally, for design, initial mounting and maintenance reasons, the given ducted tail rotor should be easy to assemble to the tail gearbox and include as few movable parts as possible for positioning and clamping of the tail rotor blades inside of the hub-body.

Usually, a respective connection of the hub-body to the tail gearbox resp. its tail rotor drive shaft, as well as support of the tail rotor blades in centrifugal direction is realized with a single component, i. e. the above-described splined flange. This splined flange conventionally consists of a toothed center sleeve which is mounted to a correspondingly splined section of the tail rotor drive shaft to transfer rotation and torque from the tail gearbox into the ducted tail rotor. In order to provide for a sufficient strength for a secure and reliable transfer of rotation and torque, the splined flange is conventionally made of titanium or steel. Furthermore, in order to realize transfer of rotation and torque from the splined flange into the hub-body, both components are usually rigidly attached to each other by means of shear bushings or blade bolts.

More specifically, the splined flange is usually provided with a borehole circle introduced into two horizontal flange plates which are positioned on top and below corresponding tail rotor blade attachments and merged resp. integrally formed in one piece with the toothed center sleeve. To position the tail rotor blades vertically, there is conventionally one sliding bushing per tail rotor blade, which clamps the tail rotor blade against a bottom plate of the splined flange with a respective blade bolt.

However, due to an underlying amount of used movable parts, the assembly process of the conventional rotor hub is demanding, in particular as the sliding bushings need to be held in position while the tail rotor blades are installed. Furthermore, due to a respectively applied material choice during manufacturing of the splined flange, i. e. in choosing either steel or titanium, the splined flange is usually either heavy, if steel is used for implementing the hub-body of a given rotor hub, or expensive, if titanium is used for implementing the hub-body of the given rotor hub.

In summary, conventional rotor hubs require a splined connection in steel or titanium between a toothed center sleeve of a given splined flange and a respective tail rotor drive shaft due to high loading. They are disadvantageous as the flange plates and the toothed center sleeve are conventionally merged into a single splined flange, i. e. implemented as an integral component in one piece, and are, therefore, made of the same material. As mentioned above, this leads either to a heavy or an expensive splined flange, depending on a respectively selected material, i. e. steel or titanium. Moreover, conventional rotor hubs require a comparatively important number of movable parts, e. g. the sliding bushings, which increases assembly and maintenance effort.

It is, therefore, an object of the present invention to provide a new rotor hub for a tail rotor of a rotorcraft, which exhibits a reduced overall weight and enables significant cost savings in manufacturing.

This object is solved by a rotor hub for a tail rotor of a rotorcraft that comprises a plurality of tail rotor blades which are drivable by means of an associated tail rotor drive shaft, the rotor hub comprising the features of claim 1.

More specifically, according to the invention a rotor hub for a tail rotor of a rotorcraft that comprises a plurality of tail rotor blades which are drivable by means of an associated tail rotor drive shaft is provided. The rotor hub comprises a cup-shaped hub-body that is adapted for supporting the plurality of tail rotor blades. The cup-shaped hub-body comprises at least a bottom wall that is made of fiber reinforced polymers and adapted for being attached to the plurality of tail rotor blades. The bottom wall comprises a central aperture and a form-fit section. The rotor hub further comprises a central blade mount that is adapted for being attached to the plurality of tail rotor blades. The central blade mount is provided with a metallic splined sleeve that is adapted for being drivingly coupled to the associated tail rotor drive shaft. The metallic splined sleeve is mounted to the central aperture and connected to the form-fit section of the bottom wall by means of a form-fit connection.

According to one aspect, the flange plates used in the conventional rotor hubs are now realized as a fiber reinforced polymer components separate from the toothed center sleeve, resp. the splined sleeve. Furthermore, one of these flange plates is now an integral part, i. e. integrated into the hub-body and, more specifically, into a bottom wall of the hub-body, which is now also realized as a fiber reinforced polymer component. The toothed center sleeve, resp. the splined sleeve, is a metallic component that is connected to the composite flange plates by means of a suitable form-fit connection.

More specifically, the metallic toothed center sleeve, resp. the splined sleeve is preferably coupled to the composite bottom wall of the hub-body as well as to the separate composite flange plate resp. composite central flange by means of a glued and/or bonded form-fit connection that is suitable to transfer torque loadings. This results in the capability of using steel and/or titanium for the highly loaded toothed connection defined by the metallic splined sleeve and simultaneously composite material for the composite bottom wall of the hub-body and the composite central flange for the tail rotor blade support.

Advantageously, by realizing a glued and/or bonded form-fit connection that is suitable to transfer torque loadings between the metallic splined sleeve and the composite bottom wall of the hub-body and between the metallic splined sleeve and the composite central flange, a metal/composite hybrid design is provided and use of the most suitable material for transfer of the torque loadings is enabled without a particular need for using the best one for the highest loaded point. Therefore, the metal needed for the splined connection and, thus, the metallic splined sleeve can be used while avoiding a respective weight penalty resulting from conventionally integrated flange plates, as such plates are now realized by means of the more lightweight composite bottom wall of the hub-body and the more lightweight composite central flange.

In other words, the inventive metal/composite hybrid design with the metallic splined sleeve and the composite bottom wall of the hub-body as well as the composite central flange is much lighter than the conventional splined flange which is realized as a single component made from steel or titanium. With respect to costs, it should be noted that even a single steel component for implementing the conventional splined flange, which is significantly cheaper than a single titanium component, is still much more expensive than e. g. a steel/composite hybrid design according to the present invention.

Furthermore, as the hub-body according to the present invention is used as a bottom plate, the central mount according to the present invention is integrated into the hub-body. Thus, shear bushings that are conventionally used to transfer the torque loadings from the splined flange into the hub-body are no longer needed. Accordingly, overall weight and costs of the rotor hub can be reduced significantly.

Advantageously, in comparison to the conventional rotor hubs, there are no more sliding bushings in use. In other words, instead of a single sliding bushing per tail rotor blade, there are now preferably two separate bushings provided for each tail rotor blade, i. e. one bushing is arranged in the composite bottom wall of the hub-body and another bushing is arranged in the composite central flange. Both such bushings are preferentially glued and/or bonded into the respective composite components, i. e. the composite bottom wall and the composite central flange. Advantageously, the gluing and/or bonding of the bushings eliminates wear on respective openings provided for accommodation of the bushings in the composite bottom wall and the composite central flange and, therefore, extends life time of the inventive rotor hub significantly.

As a result, by integrating the central mount according to the present invention into the hub-body by gluing and/or bonding as well as by means of a form-fit connection, and by gluing and/or bonding the bushings into the composite bottom wall of the hub-body and the composite central flange, an underlying number of respectively required separate components for realization of the rotor hub according to the present invention is reduced in a ratio of up to 14 to 1. This significantly reduces a required workload for (dis-)assembling and maintaining the rotor hub according to the present invention.

Moreover, for clamping the tail rotor blades as required between the composite bottom wall and the composite central flange, a respective torque on corresponding rotor blade bolts is preferably applied such that the composite central flange is sufficiently deflected towards the composite bottom wall for clamping the tail rotor blades between the composite bottom wall and the composite central flange. Therefore, preferentially only a very small gap between respective bushings and an associated tail rotor blade is provided, which is e. g. realized with a separate tooling used for gluing and/or bonding the bushings in the composite bottom wall and the composite central flange. As a result of this gluing resp. bonding, there are no more movable parts that are to be taken care of during assembly and maintenance.

According to a preferred embodiment, the metallic splined sleeve comprises steel and/or titanium.

According to a further preferred embodiment, the metallic splined sleeve is glued and/or bonded to the form-fit section of the bottom wall.

According to a further preferred embodiment, the metallic splined sleeve is glued and/or bonded to the form-fit section of the bottom wall by means of a high temperature resistant adhesive.

According to a further preferred embodiment, the form-fit section comprises a circular recess that is provided with a plurality of radial recess extensions.

According to a further preferred embodiment, the metallic splined sleeve comprises at least one form-fit flange with a shaping that corresponds to a respective shaping of the form-fit section, the at least one form-fit flange forming the form-fit connection with the form-fit section.

According to a further preferred embodiment, the form-fit section comprises a circular recess that is provided with a plurality of radial recess extensions. The at least one form-fit flange comprises a plurality of form-fit arms, the plurality of form-fit arms engaging the plurality of radial recess extensions in form-fit manner.

According to a further preferred embodiment, the central blade mount further comprises a central flange that is made of fiber reinforced polymers, the central flange being mounted to the metallic splined sleeve by means of a form-fit connection. The central flange is spaced apart from the bottom wall and the central flange is adapted for being attached to the plurality of tail rotor blades.

According to a further preferred embodiment, the central flange comprises a circular recess that is provided with a plurality of radial recess extensions.

According to a further preferred embodiment, the metallic splined sleeve comprises at least one form-fit flange with a shaping that corresponds to a respective shaping of the circular recess and the plurality of radial recess extensions of the central flange. The at least one form-fit flange of the metallic splined sleeve forms the form-fit connection with the central flange.

According to a further preferred embodiment, the at least one form-fit flange is glued and/or bonded to the central flange.

According to a further preferred embodiment, the at least one form-fit flange is glued and/or bonded to the central flange by means of a high temperature resistant adhesive.

According to a further preferred embodiment, the central flange comprises a plurality of openings that are provided for accommodating blade bolts which are adapted for attaching the plurality of tail rotor blades to the central flange. An associated bushing is glued and/or bonded to each one of the plurality of openings.

According to a further preferred embodiment, the cup-shaped hub-body comprises at least an outer wall and an inner wall that are made of fiber reinforced polymers and connected to each other via the bottom wall. The outer and inner walls are coaxially oriented with respect to the metallic splined sleeve and adapted for supporting the plurality of tail rotor blades.

Advantageously, the inventive rotor hub enables a secure and reliable fixation of the plurality of tail rotor blades in centrifugal direction as well as a secure connection to an associated tail gearbox and transfer of torque loadings into the hub-body of the rotor hub. Furthermore, the inventive rotor hub is comparatively light weight, can be manufactured with reduced, comparatively low costs and comprises a reduced number of movable parts, which must be taken into consideration during (dis-)assembling and maintenance.

The present invention is further related to a rotorcraft with a rotor hub as described above.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a side view of a rotorcraft with a ducted tail rotor according to the invention, and an enlarged perspective view of the ducted tail rotor,
- Figure 2 shows a partially cut plan view of the ducted tail rotor of Figure 1 with a rotor hub according to the invention,
- Figure 3 shows a perspective view of the rotor hub of Figure 2 with a rotor hub-body and a central blade mount according to the invention,
- Figure 4 shows a sectional view of the rotor hub of Figure 3,
- Figure 5 shows a perspective view of the rotor hub-body of Figure 3 and Figure 4,
- Figure 6 shows a perspective view of the central blade mount of Figure 3 and Figure 4 with a splined sleeve and a central flange according to the invention,
- Figure 7 shows a top view of the central flange of Figure 6,
- Figure 8 shows a perspective view of the splined sleeve of Figure 6,
- Figure 9 shows a top view of the central flange of Figure 7 with a flange bushing according to the invention, and
- Figure 10 shows a perspective view of the rotor hub of Figure 3 and Figure 4 with blade attachments and rotor blade bolts according to the present invention.

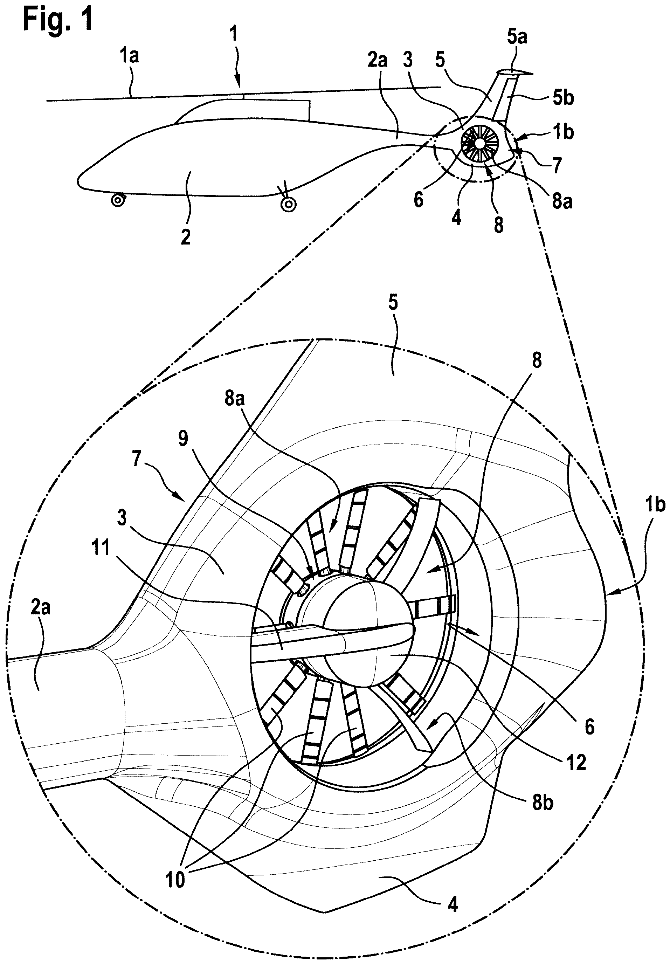

Figure 1 shows a rotorcraft 1 with a fuselage 2 that comprises a tail boom 2a. The rotorcraft 1 is illustratively embodied, and therefore hereinafter for simplicity also referred to, as a helicopter.

The helicopter 1 comprises at least one main rotor 1a configured to provide lift and forward thrust during operation, and at least one counter-torque device 8 configured to provide counter-torque during operation, i. e. to counter the torque created by rotation of the at least one main rotor 1a for purposes of balancing the helicopter 1 in terms of yaw. It should, however, be noted that the present invention is not limited to helicopters and may likewise be applied to other aircrafts that are equipped with rotary wings and at least one counter-torque device according to the present invention.

The at least one counter-torque device 8 is illustratively provided at an aft section 1b of the tail boom 2a, which preferably comprises at least one duct-type portion 7. By way of example, the aft section 1b further comprises a bumper 4 and a fin 5 in the form of a T-tail having a tail wing 5a and a rudder 5b. The tail wing 5a is preferably adjustable in its inclination and can overtake the functioning of a horizontal stabilizer. Alternatively, or in addition, the helicopter 1 is provided with a suitable horizontal stabilizer. The rudder 5b is preferably adapted to provide for enhanced directional control of the helicopter 1 and can be deflected to large angles to reduce a given lateral drag of the fin 5 in sideward flight.

However, it should be noted that the T-tail configuration of the fin 5 and the rudder 5b, as well as the horizontal stabilizer, are merely described for illustrating one exemplary embodiment of the present invention and not for limiting the invention accordingly. Instead, the present invention as described hereinafter can be used with any arbitrary duct-type portion of a rotorcraft, independent on whether this duct-type portion is provided with a T-tail fin or an otherwise configured fin, with or without a rudder and with or without a horizontal stabilizer.

Preferably, the duct-type portion 7 is provided with a shroud 3 that defines at least one transverse duct 6 having preferentially an at least approximately circular or annular cross section, wherein at least one counter-torque rotor 8a is arranged rotatably. The at least one transverse duct 6 illustratively extends through the shroud 3. Furthermore, at least one counter-torque stator 8b is fixedly arranged inside the at least one transverse duct 6 in order to support the at least one counter-torque rotor 8a rotatably. The counter-torque rotor 8a, the counter-torque stator 8b and the shroud 3, i. e. the transverse duct 6, illustratively define the at least one counter-torque device 8 of the helicopter 1, which is embodied in the form of a ducted tail rotor and, more specifically, in the form of a Fenestron® tail rotor. Accordingly, for simplicity and clarity, the counter-torque device 8 and, in particular, the counter-torque rotor 8a is hereinafter also referered to as the "ducted tail rotor".

The at least one ducted tail rotor 8a illustratively comprises a rotor hub 9 with a rotor axis, and a plurality of tail rotor blades 10 that are attached to the rotor hub 9. The plurality of tail rotor blades 10 is preferably, but not necessarily, distributed in an angularly uneven manner on the rotor hub 9 using phase modulation. More specifically, phase modulation describes the technique of reshaping the noise-frequency spectrum, e. g. such that the geometric angular positions of the plurality of tail rotor blades 10 on the rotor hub 9 are distributed using the sinusoidal modulation law described in the document EP 0 680 871 A1, the teachings of which are expressly incorporated into the present application.

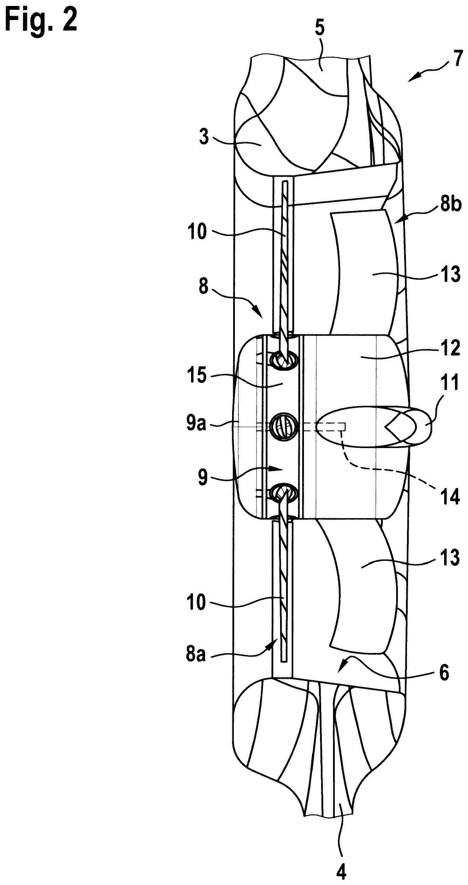

The at least one counter-torque stator 8b illustratively comprises a drive shaft fairing 11 that is fixedly arranged inside the at least one transverse duct 6 and connects a gearbox fairing 12 to the shroud 3. The drive shaft fairing 11 is preferably adapted to receive a power transmission shaft of the at least one ducted tail rotor 8a. The gearbox fairing 12 is further connected to the shroud 3 by means of associated stator vanes (13 in Figure 2). Preferably, the gearbox fairing 12 is adapted to receive a rotor drive transmission of the at least one ducted tail rotor 8a and can further be adapted to receive pitch variation mechanisms for the plurality of tail rotor blades 10.

Figure 2 shows the duct-type portion 7 of Figure 1 with the at least one ducted tail rotor 8a and the at least one counter-torque stator 8b, which are arranged in the at least one transverse duct 6 of the shroud 3. Preferably, the at least one ducted tail rotor 8a is arranged in close proximity to the at least one counter-torque stator 8b and, more specifically, upstream to the at least one counter-torque stator 8b with respect to an air flow generated by the ducted tail rotor 8a in operation.

The at least one ducted tail rotor 8a comprises the plurality of tail rotor blades 10 and the rotor hub 9, which is illustratively covered by a hub cover 9a. The at least one counter-torque stator 8b comprises the drive shaft fairing 11 that is fixedly arranged inside the at least one transverse duct 6 and connects the gearbox fairing 12 to the shroud 3. The gearbox fairing 12 is connected to the shroud 3 by means of associated stator vanes 13.

Preferably, the ducted tail rotor 8a is provided with a pitch control device that is at least adapted for controlling collective pitch of the plurality of tail rotor blades 10. The pitch control device is preferably actuatable by means of an associated pitch control shaft which, in turn, is e. g. operated by the pitch variation mechanisms accommodated in the gearbox fairing 12. However, a suitable pitch control device as such as well as suitable pitch variation mechanisms as such are well-known to the person skilled in the art and not part of the present invention. Therefore, they are not described in more detail, for brevity and conciseness.

According to one aspect, the ducted tail rotor 8a is driven in operation by means of an associated tail rotor drive shaft 14, which preferably drivingly couples a hub-body 15 of the rotor hub 9 of the ducted tail rotor 8a to an associated tail gearbox, e. g. via a rotor drive transmission that is accommodated in the gearbox fairing 12, as described above at Figure 1. Preferably, the hub-body 15 is adapted for supporting the plurality of tail rotor blades 10, which are, thus, drivable by means of the associated tail rotor drive shaft 14.

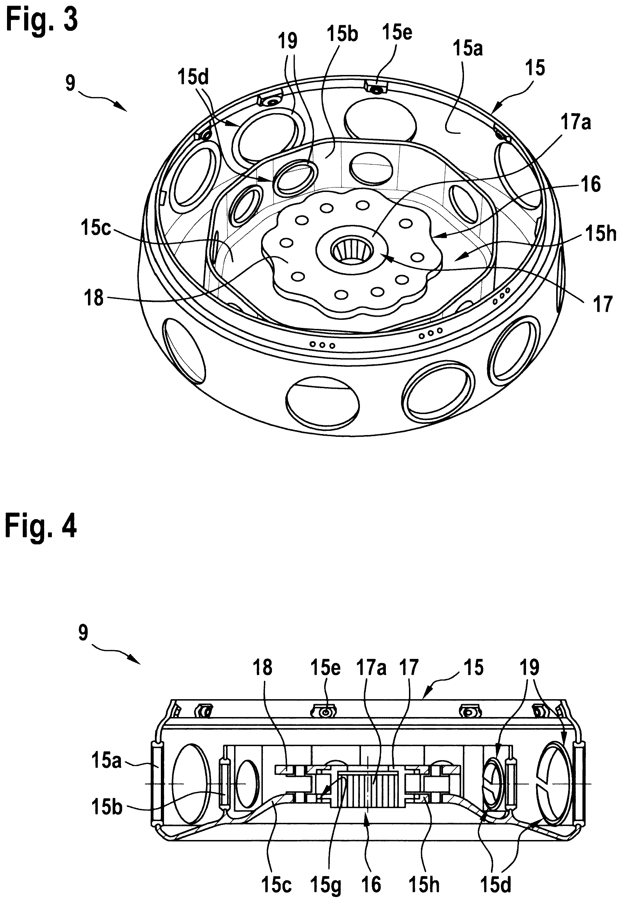

Figure 3 shows the rotor hub 9 of Figure 1 and Figure 2, which comprises the hub-body 15 that is adapted for supporting the plurality of tail rotor blades 10 of the tail rotor 8a of the rotorcraft 1. The plurality of tail rotor blades 10 is drivable by means of the tail rotor drive shaft 14.

According to one aspect, the hub-body 15 is cup-shaped and comprises an outer wall 15a, an inner wall 15b and a bottom wall 15c. The outer wall 15a and the inner wall 15b are preferably ringshaped and integrally formed, preferentially in one piece, with the bottom wall 15c, such that the latter connects the outer wall 15a to the inner wall 15b. The outer wall 15a preferably exhibits a circular profile resp. a circular cross-section, while the inner wall 15b preferentially exhibits a polygonal profile resp. a polygonal cross-section. Preferably, at least the bottom wall 15c is made of fiber reinforced polymers and adapted for being attached to the plurality of tail rotor blades 10 of Figure 1 and Figure 2. However, also the outer wall 15a and the inner wall 15b and, thus, the entire hub-body 15 is preferentially made of fiber reinforced polymers.

More specifically, according to one aspect the entire hub-body 15 comprises carbon fiber reinforced polymers. However, other fiber reinforced polymers, such as e. g. glass and/or aramid fiber reinforced polymers, are likewise contemplated.

The outer wall 15a and the inner wall 15b are preferably coaxially arranged and provided with a predetermined number of coaxially aligned, round apertures. By way of example and for simplicity and clarity of the drawings, only two coaxially aligned, round apertures are labelled with the reference number 15d. Illustratively, these two coaxially aligned, round apertures 15d are equipped with suitable torsion bearings 19 that are adapted for rotatably bearing an associated one of the plurality of tail rotor blades 10 of Figure 1 and Figure 2. Similarly, all other coaxially aligned, round apertures in the outer and inner walls 15a, 15b are likewise equipped with suitable torsion bearings that are adapted for rotatably bearing other ones of the plurality of tail rotor blades 10 of Figure 1 and Figure 2.

Preferably, the outer wall 15a is further provided with a plurality of cover attachments 15e. The plurality of cover attachments 15e is preferentially adapted to allow a secure and reliable attachment of the hub cover 9a of Figure 2 to the hub-body 15. Thus, the plurality of cover attachments 15e can be implemented by any means that allow implementation of such a secure and reliable attachment. For instance, the plurality of cover attachments 15e is realized by means of riveted nuts such that the hub cover 9a of Figure 2 may be screwed onto the hub-body 15 using suitable screws.

According to one aspect, the hub-body 15 is provided with a central blade mount 16 that is, similar to the bottom wall 15c, also adapted for being attached to the plurality of tail rotor blades 10 of Figure 1 and Figure 2. Preferably, the central blade mount 16 is mounted to a reinforced central portion of the bottom wall 15c of the hub-body 15, which is preferentially implemented as a reinforced central baseplate 15h.

The central blade mount 16 is preferably provided with a central component 17 which preferentially comprises at least a metallic splined sleeve 17a that is adapted for being drivingly coupled to the tail rotor drive shaft 14 of Figure 2. The metallic splined sleeve 17a preferably comprises steel and/or titanium.

Preferably, the central blade mount 16 further comprises a central flange 18. The central flange 18 is spaced apart from the bottom wall 15c and preferentially adapted for being attached to the plurality of tail rotor blades 10 of Figure 1 and Figure 2.

According to one aspect, the central flange 18 is made of fiber reinforced polymers. More specifically, according to one aspect the central flange 18 comprises carbon fiber reinforced polymers. However, other fiber reinforced polymers, such as e. g. glass and/or aramid fiber reinforced polymers, are likewise contemplated.

Figure 4 shows the rotor hub 9 of Figure 3 with the hub-body 15 that comprises the outer wall 15a, the inner wall 15b and the bottom wall 15c, and with the central blade mount 16 that comprises the splined central component 17 and the central flange 18. Moreover, the reinforced central portion of the bottom wall 15c of the hub-body 15, which is preferentially implemented as the reinforced central baseplate 15h, to which the central blade mount 16 is mounted, is further illustrated.

According to one aspect, the bottom wall 15c and, more particularly, the reinforced central baseplate 15h, is provided with a central aperture 15g. The splined central component 17 is preferably arranged at least partly in the central aperture 15g, preferentially glued and/or bonded.

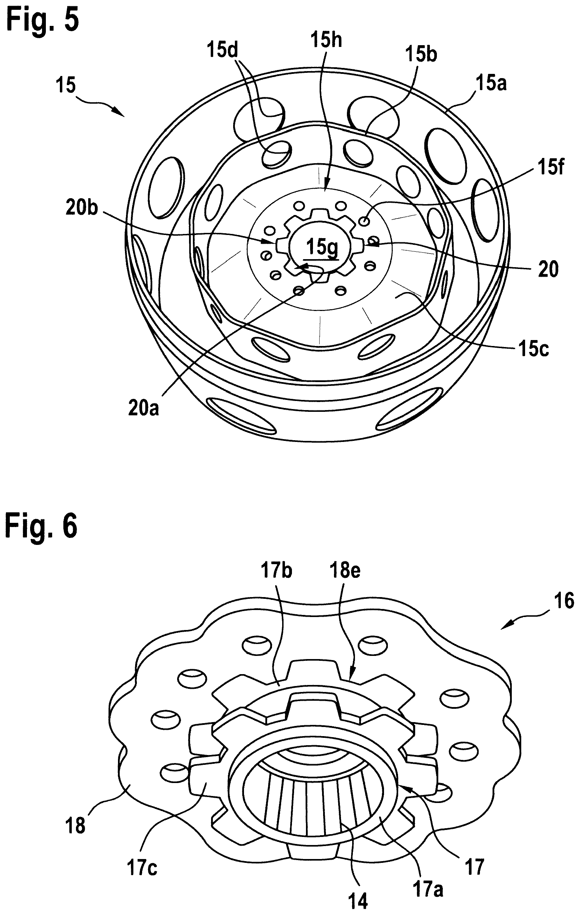

Figure 5 shows the hub-body 15 of Figure 3 and Figure 4, with the outer wall 15a, the inner wall 15b and the bottom wall 15c. The bottom wall 15c comprises the reinforced central baseplate 15h that is provided with the central aperture 15g.

According to one aspect, the bottom wall 15c and, more specifically, the reinforced central baseplate 15h comprises a form-fit section 20. The form-fit section 20 exemplarily exhibits in cross-section the shape of a toothed wheel or ring that encompasses the central aperture 15g. Illustratively, the form-fit section 20 comprises a circular recess 20a that is provided with a plurality of radial recess extensions 20b. By way of example, the form-fit section 20 is machined into the bottom wall 15c, resp. the reinforced central baseplate 15h, after manufacturing of the hub-body 15.

Preferably, the central component 17 and, more specifically, the metallic splined sleeve 17a of Figure 3 and Figure 4 is mounted to the central aperture 15g and connected to the form-fit section 20 of the bottom wall 15c by means of a form-fit connection. Preferentially, the metallic splined sleeve 17a of Figure 3 and Figure 4 is also glued and/or bonded to the form-fit section 20, preferably by means of a high temperature resistant adhesive.

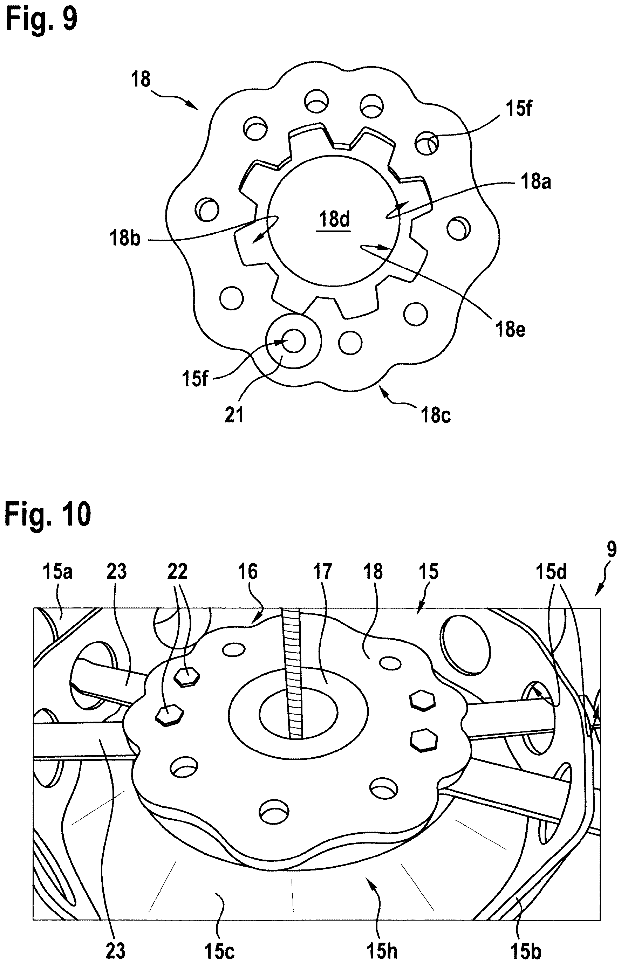

According to one aspect, a plurality of openings is provided in the bottom wall 15c and, more specifically, in the reinforced central baseplate 15h for accommodating blade bolts (22 in Figure 10) which are adapted for attaching the plurality of tail rotor blades 10 of Figure 1 and Figure 2 to the bottom wall 15c. Preferably, a number of openings is provided for defining the plurality of openings that corresponds to a respective number of tail rotor blades that defines the plurality of tail rotor blades 10 of Figure 1 and Figure 2. However, for simplicity and clarity of the drawings only a single opening is labelled with the reference number 15f.

Figure 6 shows the central blade mount 16 of Figure 3 and Figure 4, with the splined central component 17 and the central flange 18. The splined central component 17 comprises the splined sleeve 17a and is preferably mounted to the central flange 18 by means of a form-fit connection, preferentially to a form-fit section 18e of the central flange 18. Preferably, the metallic splined sleeve 17a is also glued and/or bonded to the central flange 18 resp. the form-fit section 18e, preferably by means of a high temperature resistant adhesive.

According to one aspect, the metallic splined sleeve 17a comprises at least one form-fit flange 17c that forms the form-fit connection with the form-fit section 20 of Figure 5 upon mounting of the splined central component 17 resp. the metallic splined sleeve 17a to the bottom wall 15c of the hub-body 15 of Figure 5. Therefore, with respect to Figure 5, the at least one form-fit flange 17c is also referred to as the "lower form-fit flange 17c" hereinafter, for simplicity and clarity.

Preferably, the lower form-fit flange 17c has a shaping that corresponds to a respective shaping of the form-fit section 20 of Figure 5. Illustratively, the lower form-fit flange 17c exhibits in cross-section the shape of a toothed wheel or ring that encompasses the metallic splined sleeve 17a.

According to one aspect, the metallic splined sleeve 17a further comprises at least one other form-fit flange 17b that forms a form-fit connection with the form-fit section 18e of the central flange 18 upon mounting of the splined central component 17 resp. the metallic splined sleeve 17a to the central flange 18. Therefore, with respect to the lower form-fit flange 17c, the at least one other form-fit flange 17b is also referred to as the "upper form-fit flange 17b" hereinafter, for simplicity and clarity.

Preferably, the upper form-fit flange 17b has a shaping that corresponds to a respective shaping of the form-fit section 18e of the central flange 18. Illustratively, the upper form-fit flange 17b exhibits in cross-section the shape of a toothed wheel or ring that encompasses the metallic splined sleeve 17a. Preferentially, the upper form-fit flange 17b is glued and/or bonded to the central flange 18, preferably by means of a high temperature resistant adhesive.

According to one aspect, the upper form-fit flange 17b is spaced apart from the lower form-fit flange 17c by a predetermined distance. The predetermined distance preferably amounts at least to a thickness of a respective tail rotor blade attachment (23 in Figure 10) that is to be mounted to the central blade mount 16.

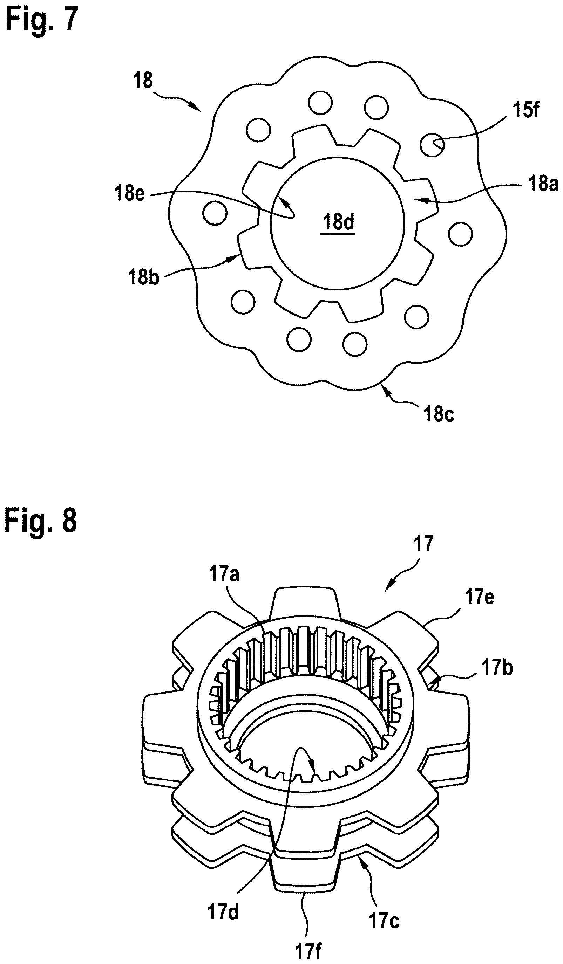

Figure 7 shows the central flange 18 of Figure 3, Figure 4 and Figure 6, with the form-fit section 18e. The central flange 18 preferably comprises a circular recess 18a that is provided with a plurality of radial recess extensions 18b. The circular recess 18a and the plurality of radial recess extensions 18b exemplarily define the form-fit section 18e. Furthermore, a central aperture 18d is provided for an at least partial accommodation of the metallic splined sleeve 17a of Figure 6. Thus, the form-fit section 18e exemplarily exhibits in cross-section the shape of a toothed wheel or ring that encompasses the central aperture 18d.

According to one aspect, a plurality of openings is provided in the central flange 18 for accommodating blade bolts (22 in Figure 10) which are adapted for attaching the plurality of tail rotor blades 10 of Figure 1 and Figure 2 to the central flange 18. Preferably, a number of openings is provided for defining the plurality of openings that corresponds to a respective number of tail rotor blades that defines the plurality of tail rotor blades 10 of Figure 1 and Figure 2. However, for simplicity and clarity of the drawings only a single opening is labelled with the reference number 15f.

Illustratively, the central flange 18 exhibits an outer geometry 18c that is undulated and cloud-shaped. This outer geometry 18c is preferably predefined such that a minimum required structural strength around the openings 15f can be guaranteed.

According to one aspect, the central flange 18 is plate-shaped and has a quasi-isotropic ply-layout made from carbon fiber reinforced prepreg. Preferably, the central aperture 18d, the form-fit section 18e and the plurality of openings 15f are machined after curing of the carbon fiber reinforced prepreg.

Figure 8 shows the splined central component 17 of Figure 3, Figure 4 and Figure 6, with the metallic splined sleeve 17a, the upper form-fit flange 17b and the lower form-fit flange 17c. According to one aspect, the splined central component 17 is machined from steel or titanium.

Preferably, the lower form-fit flange 17c comprises a plurality of form-fit arms 17f that engage in form-fit manner with the plurality of radial recess extensions 20b of the form-fit section 20 of Figure 5 upon mounting of the splined central component 17 resp. the metallic splined sleeve 17a to the bottom wall 15c of the hub-body 15 of Figure 5. Similarly, the upper form-fit flange 17b comprises a plurality of form-fit arms 17e that engage in form-fit manner with the plurality of radial recess extensions 18b of the form-fit section 18e of Figure 7 upon mounting of the splined central component 17 resp. the metallic splined sleeve 17a to the central flange 18 of Figure 7.

According to one aspect, the metallic splined sleeve 17a comprises an inner splined circumference 17d. This inner splined circumference 17d is preferably adapted for drivingly engaging a correspondingly splined outer circumference of the tail rotor drive shaft 14 of Figure 2.

Figure 9 shows the central flange 18 of Figure 3, Figure 4, Figure 6 and Figure 7, with the central aperture 18d, the form-fit section 18e and the plurality of openings 15f. According to one aspect, each one of the plurality of openings 15f is provided with an associated bushing that is preferably adapted for accommodating a blade bolt (22 in Figure 10) and that is, preferentially, glued and/or bonded to the respective one of the plurality of openings 15f. However, for purposes of simplicity and clarity of the drawings, only a single bushing is shown and labelled with the reference number 21.

According to one aspect, by gluing and/or bonding the bushing 21 into the opening 15f of the central flange 18, a required barrier for protection against chemical corrosion between the fiber reinforced polymer used for forming the central flange 18 and a respective metal used for forming the bushing 21 can be provided. For the same reasons, respective bushings are also glued and/or bonded into the plurality of openings 15f provided in the bottom wall 15c of the hub-body 15 of Figure 3, Figure 4 and Figure 5. Furthermore, again for the same reasons, the splined central component 17 of Figure 8 is glued and/or bonded to the central flange 18 and the bottom wall 15c of the hub-body 15 of Figure 3, Figure 4 and Figure 5.

Figure 10 shows the rotor hub 9 of Figure 3 and Figure 4, with the hub-body 15 that comprises the bottom wall 15c, and the central blade mount 16 that comprises the splined central component 17 and the central flange 18. By way of example, four blade attachments 23 are rigidly attached to the central flange 18 and the bottom wall 15c by means of associated blade bolts 22. The associated blade bolts 22 are preferably tightened such that the blade attachments 23 are clamped between the central flange 18 and the bottom wall 15c. However, for simplicity and clarity of the drawings, illustration of the bushings 21 of Figure 9 was omitted.

It should be noted that the above described, preferred embodiments are merely described to illustrate possible embodiments of the present invention, but not in order to restrict the present invention, which is instead intended to be limited only by the appended claims.

For instance, the described and illustrated shapings of the form-fit sections provided in the central flange and the bottom wall of the hub-body of the inventive rotor hub can be varied arbitrarily without influencing an underlying functionality thereof. As a consequence, corresponding shapings of the metallic splined sleeve can be adapted as required.

### Reference List

- 1: rotorcraft
- 1a: main rotor
- 1b: fuselage aft section
- 2: fuselage
- 2a: tail boom
- 3: shroud
- 4: bumper
- 5: fin
- 5a: tail wing
- 5b: rudder
- 6: transverse duct
- 7: duct-type tail portion
- 8: counter-torque device
- 8a: counter-torque rotor
- 8b: counter-torque stator
- 9: counter-torque rotor hub
- 9a: rotor hub cover
- 10: counter-torque rotor blades
- 11: drive shaft fairing
- 12: gearbox fairing
- 13: stator vanes
- 14: tail rotor drive shaft
- 15: rotor hub-body
- 15a: outer circular wall
- 15b: inner polygonal wall
- 15c: bottom wall
- 15d: round apertures
- 15e: hub cover attachments
- 15f: blade bolt receiving openings
- 15g: central aperture
- 15h: reinforced central baseplate
- 16: central blade mount
- 17: splined central component
- 17a: splined sleeve
- 17b: upper form-fit flange
- 17c: lower form-fit flange
- 17d: inner splined circumference
- 17e: upper form-fit arms
- 17f: lower form-fit arms
- 18: central flange
- 18a: flange recess
- 18b: flange recess form-fit radial extensions
- 18c: central flange outer geometry
- 18d: central aperture
- 19: torsion bearings
- 20: bottom wall form-fit section
- 20a: circular bottom wall recess
- 20b: recess form-fit radial extensions
- 21: flange bushing
- 22: rotor blade bolts
- 23: blade attachments

## Claims

1. A rotor hub (9) for a tail rotor (8a) of a rotorcraft (1) that comprises a plurality of tail rotor blades (10) which are drivable by means of an associated tail rotor drive shaft (14), the rotor hub (9) comprising:
a cup-shaped hub-body (15) that is adapted for supporting the plurality of tail rotor blades (10), the cup-shaped hub-body (15) comprising at least a bottom wall (15c) that is made of fiber reinforced polymers and adapted for being attached to the plurality of tail rotor blades (10), wherein the bottom wall (15c) comprises a central aperture (15g); and
a central blade mount (16) that is adapted for being attached to the plurality of tail rotor blades (10), the central blade mount (16) being provided with a metallic splined sleeve (17a) that is adapted for being drivingly coupled to the associated tail rotor drive shaft (14), the metallic splined sleeve (17a) being mounted to the central aperture (15g),
**characterized in that** the bottom wall (15c) comprises a form-fit section (20) and the metallic splined sleeve (17a) is connected to the form-fit section (20) of the bottom wall (15c) by means of a form-fit connection.

2. The rotor hub (9) of claim 1,
wherein the metallic splined sleeve (17a) comprises steel and/or titanium.

3. The rotor hub (9) of claim 1,
wherein the metallic splined sleeve (17a) is glued and/or bonded to the form-fit section (20) of the bottom wall (15c).

4. The rotor hub (9) of claim 3,
wherein the metallic splined sleeve (17a) is glued and/or bonded to the form-fit section (20) of the bottom wall (15c) by means of a high temperature resistant adhesive.

5. The rotor hub (9) of claim 1,
wherein the form-fit section (20) comprises a circular recess (20a) that is provided with a plurality of radial recess extensions (20b).

6. The rotor hub (9) of claim 1,
wherein the metallic splined sleeve (17a) comprises at least one form-fit flange (17c) with a shaping that corresponds to a respective shaping of the form-fit section (20), the at least one form-fit flange (17c) forming the form-fit connection with the form-fit section (20).

7. The rotor hub (8) of claim 6,
wherein the form-fit section (20) comprises a circular recess (20a) that is provided with a plurality of radial recess extensions (20b), and wherein the at least one form-fit flange (17c) comprises a plurality of form-fit arms (17f), the plurality of form-fit arms (17f) engaging the plurality of radial recess extensions (20b) in form-fit manner.

8. The rotor hub (9) of claim 1,
wherein the central blade mount (16) further comprises a central flange (18) that is made of fiber reinforced polymers, the central flange (18) being mounted to the metallic splined sleeve (17a) by means of a form-fit connection, wherein the central flange (18) is spaced apart from the bottom wall (15c), and wherein the central flange (18) is adapted for being attached to the plurality of tail rotor blades (10).

9. The rotor hub (9) of claim 8,
wherein the central flange (18) comprises a circular recess (18a) that is provided with a plurality of radial recess extensions (18b).

10. The rotor hub (9) of claim 9,
wherein the metallic splined sleeve (17a) comprises at least one form-fit flange (17b) with a shaping that corresponds to a respective shaping of the circular recess (18a) and the plurality of radial recess extensions (18b) of the central flange (18), the at least one form-fit flange (17b) of the metallic splined sleeve (17a) forming the form-fit connection with the central flange (18).

11. The rotor hub (9) of claim 10,
wherein the at least one form-fit flange (17b) is glued and/or bonded to the central flange (18).

12. The rotor hub (9) of claim 11,
wherein the at least one form-fit flange (17b) is glued and/or bonded to the central flange (18) by means of a high temperature resistant adhesive.

13. The rotor hub (9) of claim 8,
wherein the central flange (18) comprises a plurality of openings (15f) that are provided for accommodating blade bolts (22) which are adapted for attaching the plurality of tail rotor blades (10) to the central flange (18), and wherein an associated bushing (21) is glued and/or bonded to each one of the plurality of openings (15f).

14. The rotor hub (9) of claim 1,
wherein the cup-shaped hub-body (15) comprises at least an outer wall (15a) and an inner wall (15b) that are made of fiber reinforced polymers and connected to each other via the bottom wall (15c), the outer and inner walls (15a, 15b) being coaxially oriented with respect to the metallic splined sleeve (17a) and adapted for supporting the plurality of tail rotor blades (10).

15. A rotorcraft (1) with a rotor hub (9) according to one of the preceding claims.

## Patentansprüche

1. Rotornabe (9) für einen Heckrotor (8a) eines Drehflügelflugzeugs (1) mit einer Mehrzahl von Heckrotorblättern (10), die mittels einer zugehörigen Heckrotor-Antriebswelle (14) antreibbar sind, wobei die Rotornabe (9) aufweist:
einen becherförmigen Nabenkörper (15), der eingerichtet ist, die Mehrzahl von Heckrotorblättern (10) zu tragen, wobei der becherförmige Nabenkörper (15) mindestens eine Bodenwand (15c) umfasst, die aus faserverstärkten Polymeren hergestellt ist und eingerichtet ist, an der Mehrzahl von Heckrotorblättern (10) befestigt zu werden, wobei die Bodenwand (15c) eine zentrale Öffnung (15g) umfasst; und
eine zentrale Blatthalterung (16), die dazu eingerichtet ist, an der Mehrzahl von Heckrotorblättern (10) angebracht zu werden, wobei die zentrale Blatthalterung (16) mit einer metallischen Keilnutbuchse (17a) versehen ist, die eingerichtet ist, um mit der zugehörigen Heckrotorantriebswelle (14) antriebsmäßig verbunden zu sein, wobei die metallische Keilnutbuchse (17a) an der zentralen Öffnung (15g) angebracht ist,
**dadurch gekennzeichnet, dass** die Bodenwand (15c) einen formschlüssigen Abschnitt (20) umfasst und die metallische Keilnutbuchse (17a) mit dem formschlüssigen Abschnitt (20) der Bodenwand (15c) mittels einer formschlüssigen Verbindung verbunden ist.

2. Rotornabe (9) nach Anspruch 1,
bei der die metallische Keilnutbuchse (17a) Stahl und/oder Titan umfasst.

3. Rotornabe (9) nach Anspruch 1,
bei der die metallische Keilnutbuchse (17a) mit dem formschlüssigen Abschnitt (20) der Bodenwand (15c) verklebt und/oder gebondet ist.

4. Rotornabe (9) nach Anspruch 3,
bei der die metallische Keilnutbuchse (17a) mit dem formschlüssigen Abschnitt (20) der Bodenwand (15c) mittels eines hochtemperaturbeständigen Klebstoffs verklebt und/oder gebondet ist.

5. Rotornabe (9) nach Anspruch 1,
bei der der formschlüssige Abschnitt (20) eine kreisförmige Aussparung (20a) umfasst, die mit einer Mehrzahl von radialen Aussparungserweiterungen (20b) versehen ist.

6. Rotornabe (9) nach Anspruch 1,
bei der die metallische Keilnutbuchse (17a) mindestens einen formschlüssigen Flansch (17c) mit einer Formgebung umfasst, die einer jeweiligen Formgebung des formschlüssigen Abschnitts (20) entspricht, wobei der mindestens eine formschlüssige Flansch (17c) die formschlüssige Verbindung mit dem formschlüssigen Abschnitt (20) bildet.

7. Rotornabe (8) nach Anspruch 6,
bei der der formschlüssige Abschnitt (20) eine kreisrunde Aussparung (20a) umfasst, die mit einer Mehrzahl von radialen Aussparungserweiterungen (20b) versehen ist, und bei der der mindestens eine formschlüssige Flansch (17c) eine Mehrzahl von formschlüssigen Armen (17f) umfasst, wobei die Mehrzahl von formschlüssigen Armen (17f) die Mehrzahl von radialen Aussparungserweiterungen (20b) formschlüssig in Eingriff nehmen.

8. Rotornabe (9) nach Anspruch 1,
bei der die zentrale Blatthalterung (16) ferner einen zentralen Flansch (18) umfasst, der aus faserverstärkten Polymeren hergestellt ist, wobei der zentrale Flansch (18) mittels einer formschlüssigen Verbindung an der metallischen Keilnutbuchse (17a) befestigt ist, bei der der zentrale Flansch (18) von der Bodenwand (15c) beabstandet ist und bei der der zentrale Flansch (18) zur Befestigung an der Mehrzahl von Heckrotorblättern (10) angepasst ist.

9. Rotornabe (9) nach Anspruch 8,
bei der der zentrale Flansch (18) eine kreisförmige Aussparung (18a) umfasst, die mit einer Mehrzahl von radialen Aussparungserweiterungen (18b) versehen ist.

10. Rotornabe (9) nach Anspruch 9,
bei der die metallische Keilnutbuchse (17a) mindestens einen formschlüssigen Flansch (17b) mit einer Formgebung umfasst, die einer jeweiligen Formgebung der kreisförmigen Aussparung (18a) und der Mehrzahl von radialen Aussparungserweiterungen (18b) des zentralen Flansches (18) entspricht, wobei der mindestens eine formschlüssige Flansch (17b) der metallischen Keilnutbuchse (17a) die formschlüssige Verbindung mit dem zentralen Flansch (18) bildet.

11. Rotornabe (9) nach Anspruch 10,
bei der der mindestens eine formschlüssige Flansch (17b) mit dem zentralen Flansch (18) verklebt und/oder gebondet ist.

12. Rotornabe (9) nach Anspruch 11,
bei der der mindestens eine formschlüssige Flansch (17b) mit dem zentralen Flansch (18) mittels eines hochtemperaturbeständigen Klebstoffs verklebt und/oder geklebt ist.

13. Rotornabe (9) nach Anspruch 8,
bei der der zentrale Flansch (18) eine Mehrzahl von Öffnungen (15f) umfasst, die zur Aufnahme von Blattbolzen (22) vorgesehen sind, die zur Befestigung der Mehrzahl von Heckrotorblättern (10) an dem zentralen Flansch (18) angepasst sind, und bei der eine zugehörige Buchse (21) an jede der Mehrzahl von Öffnungen (15f) geklebt und/oder gebondet ist.

14. Rotornabe (9) nach Anspruch 1,
bei der der becherförmige Nabenkörper (15) mindestens eine Außenwand (15a) und eine Innenwand (15b) umfasst, die aus faserverstärkten Polymeren bestehen und über die Bodenwand (15c) miteinander verbunden sind, wobei die Außen- und die Innenwand (15a, 15b) koaxial in Bezug auf die metallische Keilnutbuchse (17a) ausgerichtet sind und zum Tragen der Mehrzahl von Heckrotorblättern (10) geeignet sind.

15. Drehflügelflugzeug (1) mit einer Rotornabe (9) nach einem der vorhergehenden Ansprüche.

## Revendications

1. Moyeu de rotor (9) pour un rotor de queue (8a) d'un giravion (1) qui comprend une pluralité de pales de rotor de queue (10) lesquelles sont entrainées par un arbre d'entraînement de rotor de queue associé (14), le moyeu de rotor (9) comprenant :
un corps de moyeu en forme de coupe (15) qui est apte à supporter la pluralité de pales de rotor de queue (10), le corps de moyeu en forme de coupe (15) comprenant au moins une paroi de fond (15c) qui est formée de polymères renforcés de fibres et qui est apte à être fixée à la pluralité de pales de rotor de queue (10), dans lequel la paroi de fond (15c) comprend une ouverture centrale (15g) ; et
un support central de pales (16) qui est apte à être fixé à la pluralité de pales de rotor de queue (10), le support central de pales (16) étant pourvu d'un manchon cannelé métallique (17a) qui est apte à être couplé en entrainement à l'arbre d'entraînement de rotor de queue associé (14), le manchon cannelé métallique (17a) étant monté sur l'ouverture centrale (15g),
**caractérisé en ce que** la paroi de fond (15c) comprend une partie de forme adaptée (20) et **en ce que** le manchon cannelé métallique (17a) est raccordé à la partie de forme adaptée (20) de la paroi de fond (15c) au moyen d'un raccordement par engagement de forme adapté.

2. Moyeu de rotor (9) selon la revendication 1,
dans lequel le manchon cannelé métallique (17a) comprend de l'acier et/ou du titane.

3. Moyeu de rotor (9) selon la revendication 1,
dans lequel le manchon cannelé métallique (17a) est collé et/ou lié à la partie de forme adaptée (20) de la paroi de fond (15c).

4. Moyeu de rotor (9) selon la revendication 3,
dans lequel le manchon cannelé métallique (17a) est collé et/ou lié à la partie de forme adaptée (20) de la paroi de fond (15c) au moyen d'un adhésif résistant aux hautes températures.

5. Moyeu de rotor (9) selon la revendication 1,
dans lequel la partie de forme adaptée (20) comprend un évidement circulaire (20a) qui est prévu avec une pluralité de prolongements radiaux évidés (20b).

6. Moyeu de rotor (9) selon la revendication 1,
dans lequel le manchon cannelé métallique (17a) comprend au moins un épaulement de forme adaptée (17c) avec un façonnage qui correspond à une mise en forme respective de la partie de forme adaptée (20), ledit au moins un épaulement de forme adaptée (17c) formant le raccordement de forme adaptée avec la partie de forme adaptée (20).

7. Moyeu de rotor (8) selon la revendication 6,
dans lequel la partie de forme adaptée (20) comprend un évidement circulaire (20a) qui est pourvu d'une pluralité de prolongements radiaux évidés (20b), et dans lequel ledit au moins un épaulement de forme adaptée (17c) comprend une pluralité de doigts de forme adaptée (17f), la pluralité de doigts de forme adaptée (17f) s'engageant dans la pluralité de prolongements radiaux évidés (20b) de façon adaptée à la forme.

8. Moyeu de rotor (9) selon la revendication 1,
dans lequel le support central de pales (16) comprend en outre un épaulement central (18) qui est formé de polymères renforcés de fibres, l'épaulement central (18) étant monté sur le manchon cannelé métallique (17a) au moyen d'un raccordement par engagement de forme adapté, dans lequel l'épaulement central (18) est placé à distance de la paroi de fond (15c), et dans lequel l'épaulement central (18) est apte à être fixé à la pluralité de pales de rotor de queue (10).

9. Moyeu de rotor (9) selon la revendication 8,
dans lequel l'épaulement central (18) comprend un évidement circulaire (18a) qui est prévu avec une pluralité de prolongements radiaux évidés (18b).

10. Moyeu de rotor (9) selon la revendication 9,
dans lequel le manchon cannelé métallique (17a) comprend au moins un épaulement de forme adaptée (17b) avec un façonnage qui correspond à une mise en forme respective de l'évidement circulaire (18a) et de la pluralité de prolongements radiaux évidés (18b) de l'épaulement central (18), ledit au moins un épaulement de forme adaptée (17b) du manchon cannelé métallique (17a) formant le raccordement de forme adaptée avec l'épaulement central (18).

11. Moyeu de rotor (9) selon la revendication 10,
dans lequel ledit au moins un épaulement de forme adaptée (17b) est collé et/ou lié à l'épaulement central (18).

12. Moyeu de rotor (9) selon la revendication 11,
dans lequel ledit au moins un épaulement de forme adaptée (17b) est collé et/ou lié à l'épaulement central (18) au moyen d'un adhésif résistant aux hautes températures.

13. Moyeu de rotor (9) selon la revendication 8,
dans lequel l'épaulement central (18) comprend une pluralité d'ouvertures (15f) qui sont prévues pour accueillir des boulons de pale (22) lesquels sont aptes à fixer la pluralité de pales de rotor de queue (10) à l'épaulement central (18), et dans lequel une bague associée (21) est collée et/ou liée à chacune des ouvertures de la pluralité d'ouvertures (15f).

14. Moyeu de rotor (9) selon la revendication 1,
dans lequel le corps de moyeu en forme de coupe (15) comprend au moins une paroi extérieure (15a) et une paroi intérieure (15b) qui sont formées de polymères renforcés de fibres et raccordées l'une à l'autre via la paroi de fond (15c), les parois extérieure et intérieure (15a, 15b) étant orientées de façon coaxiale par rapport au manchon cannelé métallique (17a) et aptes à supporter la pluralité de pales de rotor de queue (10).

15. Giravion (1) avec un moyeu de rotor (9) selon l'une quelconque des revendications précédentes.
